# FASCICULE DE BREVET EUROPEEN

(11) **EP 4 267 531 B1**
(45) Date de publication et mention de la délivrance du brevet: **27.11.2024**
(21) Numéro de dépôt: 21835327.4
(22) Date de dépôt: 17.12.2021
(51) Int. Cl.: C04B 35/486, B02C 17/20, C04B 35/488, C04B 35/626, C04B 35/636, C04B 35/64, B02C 23/08, B24C 1/00

(54) **BILLE MAGNETIQUE**
MAGNETKUGEL
MAGNETIC BALL

(30) Priorité: 22.12.2020 FR 2013905
(43) Date de publication de la demande: 01.11.2023
(73) Titulaire: SAINT-GOBAIN CENTRE DE RECHERCHES ET D'ETUDES EUROPEEN, 92400 Courbevoie (FR)
(72) Inventeur: BOUTTES, David, 84000 AVIGNON (FR); NONNET, Emmanuel, 84450 SAINT SATURNIN LES AVIGNON (FR)
(74) Mandataire: Cabinet Nony
(86) Numéro de dépôt international: PCT/EP2021/086578
(87) Numéro de publication internationale: WO 2022/136176

(56) Documents cités:
- CN-A- 110 606 739
- FR-A1- 2 882 749
- US-A- 5 022 592
- US-A1- 2002 047 058

## Description

### Domaine technique

L'invention concerne des billes frittées, notamment pour le broyage de matières alimentaires.

### Art antérieur

Différentes industries mettent en oeuvre des billes pour le broyage fin de matières, ou « microbroyage ».

Toutes ces billes présentent classiquement une taille de 0,03 mm à 10 mm.

Les billes en zircone, au moins en partie stabilisée, sont couramment utilisées : elles présentent en effet un bon compromis entre résistance à l'usure, masse volumique et inertie chimique. Lors du microbroyage, certaines de ces billes peuvent néanmoins s'user, voire se casser, et contaminer la matière broyée.

Une telle contamination est en particulier préjudiciable dans le secteur de l'agroalimentaire.

Il existe un besoin constant pour des billes en zircone présentant une bonne résistance à l'usure et permettant de limiter la contamination de la matière broyée.

Un but de l'invention est de résoudre, au moins partiellement ce problème. Le document US 2002/047058 A1 décrit des matériaux magnétiques pour les billes frittées, par exemple Sr ou Ba ferrite, et des matériaux à base de zircone stabilisée comportant CeO₂.

### Résumé de l'invention

Selon l'invention, on atteint ce but au moyen d'une bille frittée présentant les phases cristallisées suivantes, en pourcentages en masse sur la base des phases cristallisées et pour un total de 100% :
- zircone stabilisée : complément à 100% ;
- zircone monoclinique : ≤ 20% ;
- 4% ≤ constituant magnétique ≤ 22% ;
- phases cristallisées autres que zircone stabilisée, zircone monoclinique et constituant magnétique : < 10% ;

le constituant magnétique étant choisi parmi les spinelles magnétiques, les grenats magnétiques, les ferrites hexagonales magnétiques et leurs mélanges ;
la bille frittée comportant, hors constituant magnétique, CeO₂ et optionnellement Y₂O₃, en des teneurs telles que , en pourcentages molaires sur la base de la somme de ZrO₂, CeO₂ et Y₂O₃, 1,5% ≤ CeO₂ ≤ 17,5% et 1,5% ≤ Y₂O₃ + (CeO₂)/3,5 ≤ 5%.

L'ajout d'un tel constituant magnétique, dans les quantités mentionnées, permet de séparer magnétiquement les fragments résultant de l'usure, en conservant une bonne résistance à l'usure. Les inventeurs ont découvert qu'il était cependant nécessaire que la stabilisation de la zircone soit au moins partiellement obtenue avec CeO₂, Y₂O₃ ne pouvant optionnellement être présent qu'en complément de CeO₂. En particulier, ils ont constaté que la résistance à l'usure est dégradée si la zircone stabilisée est entièrement stabilisée avec Y₂O₃.

Y₂O₃ est le stabilisant de la zircone le plus utilisé dans l'application visée. Constatant son inefficacité, c'est le mérite des inventeurs d'avoir testé d'autres stabilisants de la zircone pour découvrir l'effet spécifique et inattendu de CeO₂. Sans être liés par cette théorie, les inventeurs pensent que la présence d'un constituant magnétique pourrait entrainer une déstabilisation d'une partie de ladite zircone stabilisée avec Y₂O₃.

Par ailleurs, hors constituant magnétique, la teneur molaire en Y₂O₃ doit être adaptée à la teneur molaire en CeO₂ et les teneurs molaires de ces deux oxydes doivent être liées par la relation 1,5% ≤ Y₂O₃ + (CeO₂)/3,5 ≤ 5%.

Une bille frittée selon l'invention peut encore comporter une ou plusieurs des caractéristiques optionnelles et préférées suivantes :
- hors constituant magnétique, 3% ≤ CeO₂, de préférence 5% ≤ CeO₂, et/ou CeO₂ ≤ 16%, de préférence CeO₂ ≤ 15%, en pourcentages molaires sur la base de la somme de ZrO₂, CeO₂ et Y₂O₃ ;
- hors constituant magnétique, Y₂O₃ + (CeO₂)/3,5 est supérieure ou égale à 2% et inférieure ou égale à 4% ;
- la zircone est stabilisée entièrement avec CeO₂, ou dans laquelle la zircone stabilisée est stabilisée entièrement avec CeO₂ et Y₂O₃ ;
- la zircone stabilisée est présente, pour plus de 90%, sous la forme de zircone quadratique, en pourcentage massique sur la base de la zircone stabilisée ;
- la bille présente une teneur en zircone monoclinique, en pourcentage en masse sur la base de la quantité totale de phases cristallisées, inférieure ou égale à 10% ;
- la bille présente une teneur en constituant magnétique supérieure ou égale à 5% et inférieure ou égale à 18%, en pourcentages en masse sur la base des phases cristallisées ;
- la bille présente une teneur en constituant magnétique supérieure ou égale à 7% et inférieure ou égale à 15%, en pourcentages en masse sur la base des phases cristallisées ;
- ledit spinelle magnétique est constitué, hors oxygène et pour plus de 90% de sa masse, de fer et de zinc et de cuivre, de fer et de cuivre et d'aluminium, de fer et de nickel, de fer et de cobalt, de fer et de cuivre, de fer et de zinc, de fer et de magnésium, de fer et de manganèse, de fer et de nickel et de zinc, de fer et de nickel et de zinc et de cuivre, de fer et de manganèse et de zinc, de fer et de manganèse et de zinc et d'aluminium, de fer et de lithium et de zinc et de nickel et de manganèse, de fer et de zinc et de lithium, de fer et de zinc et de cuivre et d'aluminium et de calcium, et leurs mélanges ;
- ledit grenat magnétique est choisi parmi les grenats comportant du fer ;
- la ferrite hexagonale magnétique est choisie parmi une ferrite hexagonale de type M, une ferrite hexagonale de type W et leurs mélanges ;
- 0,2% ≤ Al₂O₃ ≤ 2%, Al₂O₃ étant exprimé hors constituant magnétique ;
- CaO ≤ 1,5%, CaO étant exprimé hors constituant magnétique ;
- la bille présente :
   - une taille inférieure à 10 mm et supérieure à 0,01 mm, et
   - une sphéricité supérieure à 0,85.

L'invention concerne également une poudre de billes frittées comprenant plus de 90%, de préférence plus de 95%, de préférence sensiblement 100%, en pourcentages en masse, de billes frittées selon l'invention.

L'invention concerne également un procédé de fabrication de billes frittées selon l'invention, ledit procédé comprenant les étapes successives suivantes :
a) préparation d'un mélange particulaire présentant une taille médiane inférieure à 2 µm et une composition adaptée pour obtenir, à l'issue de l'étape g), des billes frittées selon l'invention,
b) optionnellement, séchage dudit mélange particulaire,
c) préparation d'une charge de départ à partir dudit mélange particulaire, optionnellement séché,
d) mise en forme de la charge de départ sous la forme de billes crues,
e) optionnellement, lavage,
f) optionnellement, séchage,
g) frittage à une température de frittage supérieure à 1100°C de manière à obtenir des billes frittées.

L'invention concerne également un procédé d'extraction de billes et/ou de fragments de billes selon l'invention, ledit procédé comportant l'étape suivante :
2) application d'un champ magnétique sur lesdites billes et/ou lesdits fragments de billes, de manière à attirer lesdites billes et/ou lesdits fragments de billes.

La nature magnétique du matériau des billes selon l'invention permet avantageusement d'extraire les fragments des billes et/ou les billes d'une charge, solide ou liquide, notamment pour purifier une charge ou la préparer à une étape ultérieure, ou pour récupérer des fragments de billes et/ou des billes afin de les recycler ou les réutiliser. Le procédé peut être notamment mis en oeuvre pour purifier une charge issue d'une opération de broyage, de dispersion, d'homogénéisation ou de projection sur une surface.

Dans un mode de réalisation, l'étape 2) est précédée d'une étape 1) suivante :
1) mélange d'une matière à broyer, à disperser, à homogénéiser, ou à séparer, avec des billes selon l'invention et/ou des fragments de billes selon l'invention, puis si une matière à broyer, à disperser, ou à homogénéiser a été mélangée auxdites billes et/ou aux dit fragments de billes, broyage, dispersion ou homogénéisation dudit mélange, respectivement, de manière à obtenir une charge, le champ magnétique étant appliqué sur ladite charge à l'étape 2).

Le mélange peut être avantageusement purifié du fait de l'extraction des billes et/ou fragments de billes selon l'invention. L'étape 2) est alors une étape de purification de la charge par extraction selon l'invention, le champ magnétique étant appliqué sur ladite charge.

Une matière est « à séparer » lorsqu'après avoir été mélangée à des billes et/ou des fragments de billes selon l'invention, il est nécessaire de la séparer desdites billes et/ou desdits fragments de billes. Le mélange peut être notamment un ensemble de particules résultant d'une projection de billes selon l'invention sur une surface.

La nature magnétique du matériau des billes permet également d'isoler lesdites billes et/ou des fragments desdites billes d'un substrat sur la surface duquel lesdites billes et/ou lesdits fragments desdites billes reposent.

Le substrat peut être en particulier une pièce sur laquelle des billes selon l'invention ont été projetées ou un appareil utilisé pour ladite projection.

Dans un mode de réalisation, l'étape 2) est précédée d'une étape 1') suivante :
1') projection de billes et/ou fragments de billes selon l'invention sur une surface à traiter, par exemple une surface métallique, au moyen d'un appareil de projection, le champ magnétique étant appliqué sur ladite surface métallique ou sur ledit appareil de projection à l'étape 2).

L'étape 2) est alors une étape de récupération desdites billes ou desdits fragments de billes par extraction selon l'invention, le champ magnétique étant appliqué sur ladite surface de substrat, la surface de substrat pouvant être notamment la surface à traiter et/ou une surface dudit appareil de projection.

A l'étape 2), le champ magnétique peut être en particulier appliqué sur une surface de l'appareil de projection en contact avec les billes lors de l'opération de projection. Il permet ainsi de récupérer des billes non projetées notamment logées dans des endroits difficiles d'accès.

Il peut être également appliqué sur la surface traitée afin de la nettoyer et récupérer les billes et fragments de billes qui sont sur cette surface. Le procédé est en particulier efficace lorsque la surface comporte des cavités dans lesquelles les billes et fragments de billes peuvent se loger. L'invention concerne aussi l'utilisation d'une poudre de billes frittées selon l'invention, comme média de broyage, média de dispersion, média d'homogénéisation, ou média pour le traitement de surfaces, ainsi qu'un dispositif choisi parmi une suspension, un broyeur, un appareil de traitement de surface, un appareil de lyse de cellules, ledit dispositif comportant une poudre de billes frittées selon l'invention, en particulier fabriquées suivant un procédé selon l'invention.

### Définitions

- Par « particule », on entend un produit solide individualisé dans une poudre.
- « Poudre » et « mélange particulaire » sont classiquement des synonymes. A des fins de clarté, dans la présente description, on désigne par « mélange particulaire » la poudre qui est fabriquée à l'étape a) d'un procédé de fabrication de billes frittées selon l'invention.
- On appelle classiquement « frittage » la consolidation par traitement thermique à plus de 1100°C d'une particule crue (agglomérat granulaire), avec éventuellement une fusion, partielle ou totale, de certains de ses constituants (mais pas de tous ses constituants).
- Les « grains » d'une bille frittée sont constitués des particules du mélange particulaire agglomérées par le frittage. Une bille frittée selon l'invention est ainsi constituée d'un agglomérat de grains liés par frittage. Elle peut également comporter une phase amorphe.
- Par « bille », on entend une particule présentant une sphéricité, c'est-à-dire un rapport entre son plus petit diamètre de Ferret et son plus grand diamètre de Ferret, supérieure à 0,6, quelle que soit la façon par laquelle cette sphéricité a été obtenue. De préférence les billes selon l'invention présentent une sphéricité supérieure à 0,7.
- On appelle « taille » d'une bille, son plus petit diamètre de Ferret.
- On appelle « percentiles » 10 (noté D₁₀), 50 (noté D₅₀) et 90 (noté D₉₀) d'une poudre ou d'un mélange particulaire, les tailles de particules correspondant aux pourcentages égaux respectivement à 10%, 50% et 90%, en masse, sur la courbe de distribution granulométrique cumulée des tailles de particules de la poudre ou du mélange particulaire respectivement, lesdites tailles de particules étant classées par ordre croissant. Selon cette définition, 10% en masse des particules de la poudre ou du mélange particulaire ont ainsi une taille inférieure à D₁₀ et 90% des particules, en masse, présentent une taille supérieure ou égale à D₁₀. Les percentiles peuvent par exemple être déterminés à l'aide d'un granulomètre par diffraction laser.
- On appelle « taille médiane » d'une poudre de particules ou d'un mélange particulaire, le percentile 50, D₅₀. La taille médiane divise donc les particules de la poudre ou du mélange particulaire, en première et deuxième populations égales en masse, ces première et deuxième populations ne comportant que des particules présentant une taille supérieure ou égale, ou inférieure respectivement, à la taille médiane.
- Par « bille frittée », on entend une bille solide obtenue par frittage d'une bille crue.
- Dans le cadre de cette demande, HfO₂ est considéré comme n'étant pas chimiquement dissociable de ZrO₂. Par ailleurs, selon la présente invention, HfO₂ n'est pas ajouté volontairement dans la charge de départ et n'est présent que sous forme de traces, cet oxyde étant toujours naturellement présent dans les sources de zircone. Dans une bille selon l'invention, HfO₂ < 4%. Dans la composition chimique d'un produit comportant de la zircone, « ZrO₂ » désigne donc la teneur totale de ces deux oxydes, c'est-à-dire « ZrO₂+HfO₂ ».

Le constituant magnétique peut également comporter une faible quantité de zirconium. Sauf indication contraire, ZrO₂ désigne la teneur en oxyde de zirconium (et en oxyde d'hafnium) dans les billes. Dans la présente description et dans les revendications, « zircone » désigne la teneur totale de la zircone et de l'hafnie.
- Par « zircone stabilisée », on entend l'ensemble constitué de la zircone quadratique et de la zircone cubique.
- Par « poudre d'un composé », on entend une poudre comportant plus de 95% en masse de particules comportant plus de 90% en masse dudit composé. Ainsi, une poudre de corindon comporte plus de 95% en masse de particules comportant plus de 90% en masse de corindon. Une « poudre de zircone quadratique » comporte plus de 95% en masse de particules comportant plus de 90% en masse de zircone quadratique. Une « poudre de zircone stabilisée » comporte plus de 95% en masse de particules comportant plus de 90% en masse de zircone stabilisée.
- Par « précurseur » d'un constituant, on entend un ou plusieurs ingrédients apte(s) à fournir ledit constituant lors d'une étape de frittage d'un procédé de fabrication selon l'invention. Par exemple, des hydroxydes d'aluminium sont des précurseurs d'alumine.
- Une quantité d'un précurseur d'un oxyde est dite « équivalente » à une quantité dudit oxyde lorsque, lors du frittage, elle conduit à ladite quantité dudit oxyde.
- Par « spinelle », on entend classiquement la structure cristallographique cubique correspondant à un agencement particulier d'éléments A et d'éléments B dans des sites classiquement appelés « sites octaédriques » et « sites tétraédriques ». Les composés présentant une structure cristallographique spinelle comprennent les composés de formule AB₂O₄ appelés « spinelles directs », dans lesquels les éléments A occupent un site tétraédrique et les éléments B occupent un site octaédrique. Dans les composés de formules B(A,B)O₄, appelés « spinelles inverses », les éléments B occupent des sites tétraédriques et octaédriques et les éléments A occupent un site octaédrique. Un exemple de spinelle magnétique est le spinelle inverse NiFe₂O₄, où A est du nickel disposé sur des sites octaédriques, et B est du fer disposé sur des sites octaédriques et des sites tétraédriques.
- Par « grenat », on entend classiquement un composé de structure cristallographique cubique correspondant à un agencement particulier d'éléments C et d'éléments D de formule C₃D₅O₁₂. Un exemple de grenat magnétique est le grenat Y₃Fe₅O₁₂, où l'élément C est l'yttrium et l'élément D est le fer.
- Par « ferrite hexagonale », on entend classiquement un composé de structure cristallographique hexagonale correspondant à un agencement particulier d'éléments E et d'éléments F de formule EF₁₂O₁₉, classiquement appelée ferrite hexagonale de type M, comme par exemple BaFe₁₂O₁₉ ; ou de formule E₃F₁₆O₂₇, classiquement appelée ferrite hexagonale de type W, comme par exemple BaCo₂Fe₁₆O₂₇ ; ou de formule E₄F₂₈O₄₆, classiquement appelée ferrite hexagonale de type X, comme par exemple Ba₂Co₂Fe₂₈O₄₆ ; ou de formule E₄F₁₂O₂₂, classiquement appelée ferrite hexagonale de type Y, comme par exemple Ba₂Zn₂Fe₁₂O₂₂ ; ou de formule E₅F₂₄O₄₁, classiquement appelée ferrite hexagonale de type Z, comme par exemple Ba₃Co₂Fe₂₄O₄₁ ; ou de formule E₆F₃₆O₆₀, classiquement appelée ferrite hexagonale de type U, comme par exemple Ba₄Zn₂Fe₃₆O₆₀. Classiquement, dans une ferrite hexagonale, l'élément fer peut être partiellement, voire totalement substitué par un autre élément.
- Un constituant est dit « magnétique » lorsqu'il présente une aimantation massique supérieure à 2 A.m².kg⁻¹ mesurée à un champ magnétique d'excitation égal à 100 kA/m. Ainsi, un constituant magnétique peut être attiré par un aimant.
- L'aimantation magnétique d'un constituant ou d'une bille est classiquement mesurée à l'aide d'un magnétomètre à échantillon vibrant, en le/la soumettant à un champ magnétique d'excitation de 100 kA/m, à température ambiante (20°C).

Certains constituants magnétiques, comme la ferrite hexagonale, peuvent présenter une hystérésis. Le champ magnétique est alors monté jusqu'à dépasser l'aimantation massique de saturation, par exemple au-delà de 2500 kA/m, puis redescendu à 100 kA/m pour réaliser la mesure.

Les spinelles magnétiques, les grenats magnétiques, et les ferrites hexagonales magnétiques sont bien connues. En cas de doute, une simple mesure de l'aimantation massique, comme indiqué ci-dessus, permet de vérifier si un spinelle, un grenat ou une ferrite est magnétique.

Les spinelles magnétiques, les grenats magnétiques, et les ferrites hexagonales magnétiques peuvent contenir du cérium et/ou de l'yttrium. Ce cérium et/ou cet yttrium ne sont cependant pas pris en considération lorsqu'on détermine les teneurs « hors constituant magnétique ». Autrement dit, « hors constituant magnétique » signifie que les teneurs en ZrO₂ et/ou CeO₂ et/ou Y₂O₃ auxquelles il est fait référence ne prennent pas en compte ZrO₂ et/ou CeO₂ et/ou Y₂O₃ éventuellement présents dans le constituant magnétique. Sauf indication contraire, CeO₂ et Y₂O₃ sont des pourcentages molaires hors constituant magnétique sur la base de la somme de ZrO₂, de CeO₂ et de Y₂O₃ hors constituant magnétique.

De même, des teneurs en Al₂O₃ ou en CaO exprimées « hors constituant magnétique » sont déterminées sans prendre en compte l'Al₂O₃ ou le CaO éventuellement présents dans le constituant magnétique ;
- Dans un souci de clarté, on utilise les termes « ZrO₂ », « CeO₂ », « Y₂O₃ », « Al₂O₃ », « Fe₂O₃ », « ZnO », « CuO » et « La₂O₃ » pour désigner les teneurs de ces oxydes dans la composition, et « zircone », « cérine », « yttrine », « corindon », « oxyde de fer », « oxyde de zinc », « oxyde de cuivre » et « oxyde de lanthane » pour désigner des phases cristallisées de ces oxydes constituées de ZrO₂, de CeO₂, d'Y₂O₃, d'Al₂O₃, de Fe₂O₃, de ZnO, de CuO et de La₂O₃ respectivement. Ces oxydes peuvent cependant être également présents sous d'autres phases. Dans un mode de réalisation préféré, ZrO₂, Y₂O₃ et CeO₂ sont présents, voire exclusivement présents sous la forme de zircone stabilisée. Le terme « zircone » inclut classiquement la faible quantité de phase hafnie, non distinguable par diffraction X.
- Une teneur massique « hors oxygène » d'un constituant dans un produit est le pourcentage massique de ce constituant sur la base de masse du produit sans prendre en compte l'oxygène. Par exemple, lorsqu'un produit est « constitué, hors oxygène et pour plus de 80% sa masse, de fer », le fer représente plus de 80% de la masse du produit sans prendre en considération l'oxygène présent dans le produit.
- L'aire spécifique est calculée par la méthode BET (Brunauer Emmet Teller) telle que décrite dans Journal of American Chemical Society 60 (1938), pages 309 à 316.
- Sauf mention contraire, toutes les moyennes sont des moyennes arithmétiques.
- Sauf mention contraire, tous les pourcentages sont des pourcentages massiques sur la base des oxydes. Une teneur massique d'un élément est exprimée sous la forme de l'oxyde le plus stable. En particulier, chaque élément du constituant magnétique est converti sous la forme de l'oxyde le plus stable de cet élément.
- « Comporter » ou « comprendre » ou « présenter » doivent être interprétés de manière non limitative.
- Toutes les caractéristiques des billes peuvent être mesurées conformément aux protocoles décrits pour les exemples.

### Description détaillée

### Bille frittée

Une bille frittée selon l'invention est de préférence constituée d'oxydes pour plus de 98%, de préférence pour plus de 99%, de préférence pour plus de 99,5%, de préférence pour plus de 99,9%, de sa masse. De préférence, la bille frittée selon l'invention est sensiblement entièrement constituée d'oxydes.

De préférence, dans la bille frittée selon l'invention, la quantité massique de phase amorphe, c'est-à-dire vitreuse, en pourcentage en masse par rapport à la masse de ladite bille, est inférieure à 7%, de préférence inférieure à 5%, de préférence sensiblement nulle.

La bille frittée selon l'invention est remarquable par la stabilisation de la zircone stabilisée : la zircone est en effet spécifiquement stabilisée avec CeO₂ et optionnellement Y₂O₃.

De préférence, dans une bille frittée selon l'invention, la zircone n'est stabilisée que par CeO₂, et optionnellement Y₂O₃.

De préférence, dans la bille frittée selon l'invention, hors constituant magnétique, la teneur en CeO₂, en pourcentages molaires sur la base de la somme de ZrO₂, de CeO₂ et de Y₂O₃, est supérieure ou égale à 2%, de préférence supérieure ou égale à 3%, de préférence supérieure ou égale à 5%, et de préférence inférieure ou égale à 16%, de préférence inférieure ou égale à 15%.

De préférence, dans la bille fritté selon l'invention, hors constituant magnétique, les teneurs en CeO₂ et en Y₂O₃, en pourcentages molaires sur la base de la somme de ZrO₂, de CeO₂ et de Y₂O₃, sont telles que la somme Y₂O₃ + (CeO₂)/3,5 est supérieure ou égale à 2%, de préférence supérieure ou égale à 2,5%, et de préférence inférieure ou égale à 4%.

Dans un mode de réalisation, la zircone stabilisée est stabilisée entièrement avec CeO₂ (pas de stabilisant Y₂O₃) et la teneur en CeO₂, hors constituant magnétique, est supérieure ou égale à 2%, de préférence supérieure ou égale à 3%, de préférence supérieure ou égale à 5%, et inférieure ou égale à 17,5%, de préférence inférieure ou égale à 16%, de préférence inférieure ou égale à 15%, en pourcentages molaires sur la base de la somme de ZrO₂ et CeO₂.

Dans un mode de réalisation, la zircone stabilisée est stabilisée avec CeO₂ et Y₂O₃, et les teneurs en CeO₂ et Y₂O₃ hors constituant magnétique sont telles que, en pourcentages molaires sur la base de la somme de ZrO₂, de CeO₂ et de Y₂O₃ :
- CeO₂ est supérieure ou égale à 2%, de préférence supérieure ou égale à 3%, de préférence supérieure ou égale à 5%, et de préférence inférieure ou égale à 16%, de préférence inférieure ou égale à 15%, et
- Y₂O₃ + (CeO₂)/3,5 est supérieure ou égale à 2%, de préférence supérieure ou égale à 2,5%, et inférieure ou égale à 4%.

De préférence, dans ce mode de réalisation, hors constituant magnétique, la teneur en Y₂O₃ en pourcentages molaires sur la base de la somme de ZrO₂, de CeO₂ et de Y₂O₃ est supérieure ou égale à 0,5%, de préférence supérieure ou égale à 0,8%, et de préférence inférieure ou égale à 2%, de préférence inférieure ou égale à 1,5%.

De préférence, la zircone stabilisée est présente, pour plus de 90%, plus de 95%, plus de 98%, de préférence sensiblement 100%, sous la forme de zircone quadratique, en pourcentage massique sur la base de la zircone stabilisée. La limitation de la teneur en CeO₂ permet avantageusement de limiter la quantité de zircone cubique.

La bille frittée selon l'invention présente une teneur en zircone monoclinique, en pourcentage en masse sur la base de la quantité totale de phases cristallisées, inférieure ou égale à 20%, de préférence inférieure ou égale à 15%, de préférence inférieure ou égale à 10%, de préférence inférieure ou égale à 7%, de préférence inférieure ou égale à 5%.

La bille frittée selon l'invention est également remarquable par la présence d'un constituant magnétique, spécifiquement choisi parmi les spinelles magnétiques, les grenats magnétiques, les ferrites hexagonales magnétiques et leurs mélanges.

De préférence, le constituant magnétique présente une aimantation massique supérieure à 5 A.m².kg⁻¹, de préférence supérieure à 10 A.m².kg⁻¹, de préférence supérieure à 15 A.m².kg⁻¹, de préférence supérieure à 20 A.m².kg⁻¹, mesurée à un champs magnétique d'excitation égal à 100 kA/m.

De préférence, le constituant magnétique est choisi parmi les spinelles magnétiques, les ferrites hexagonales magnétiques et leurs mélanges. De préférence encore, le constituant magnétique est choisi parmi les spinelles magnétiques.

De préférence ledit spinelle magnétique est choisi parmi les spinelles comportant du fer, de préférence parmi les spinelles comportant du fer d'une part, et du manganèse et/ou du zinc et/ou du nickel et/ou du cuivre et/ou du cobalt et/ou du chrome et/ou du lithium et/ou du titane et/ou de l'étain et/ou du magnésium et/ou de l'aluminium et/ou du cérium et/ou du calcium d'autre part, et leurs mélanges.

De préférence, ledit spinelle magnétique est choisi parmi les spinelles comportant du fer et du zinc et du cuivre, du fer et du cuivre et d'aluminium, du fer et du nickel, du fer et du cobalt, du fer et du cuivre, du fer et du zinc, du fer et du magnésium, du fer et du manganèse, du fer et du nickel et du zinc, du fer et du nickel et du zinc et du cuivre, du fer et du manganèse et du zinc, du fer et du manganèse et du zinc et d'aluminium, du fer et du lithium et du zinc et du nickel et du manganèse, du fer et du zinc et du lithium, du fer et du zinc et du cuivre et d'aluminium et du calcium, et leurs mélanges. De préférence, ledit spinelle magnétique est choisi parmi les spinelles comportant du fer et du zinc et du cuivre, du fer et du manganèse et du zinc, et leurs mélanges.

De préférence, ledit spinelle magnétique est choisi parmi les spinelles constitués, hors oxygène et pour plus de 80%, de préférence pour plus de 90%, de préférence pour plus de 95%, de préférence pour plus de 98% de leur masse, de fer et de zinc et de cuivre, de fer et de cuivre et d'aluminium, de fer et de nickel, de fer et de cobalt, de fer et de cuivre, de fer et de zinc, de fer et de magnésium, de fer et de manganèse, de fer et de nickel et de zinc, de fer et de nickel et de zinc et de cuivre, de fer et de manganèse et de zinc, de fer et de manganèse et de zinc et d'aluminium, de fer et de lithium et de zinc et de nickel et de manganèse, de fer et de zinc et de lithium, de fer et de zinc et de cuivre et d'aluminium et de calcium, et leurs mélanges.

De préférence, ledit spinelle magnétique est choisi parmi les spinelles constitués, hors oxygène et pour plus de 80%, de préférence pour plus de 90%, de préférence pour plus de 95%, de préférence pour plus de 98% de leur masse, de fer et de zinc et de cuivre, de fer et de manganèse et de zinc, ou d'un mélange de ces éléments.

De préférence, ledit grenat magnétique est choisi parmi les grenats comportant du fer, de préférence parmi les grenats comportant du fer d'une part, et de l'yttrium et/ou de l'ytterbium et/ou de l'erbium et/ou du dysprosium et/ou du samarium et/ou du gadolinium d'autre part, et leurs mélanges.

De préférence, ledit grenat magnétique est choisi parmi les grenats comportant du fer et de l'yttrium, du fer et de l'ytterbium, et leurs mélanges.

De préférence, ledit grenat magnétique est choisi parmi les grenats constitués, hors oxygène et pour plus de 80%, de préférence pour plus de 90%, de préférence pour plus de 95%, de préférence pour plus de 98% de leur masse, de fer et d'yttrium, de fer et d'ytterbium, et leurs mélanges.

De préférence, la ferrite hexagonale magnétique est choisie parmi une ferrite hexagonale de type M, une ferrite hexagonale de type W et leurs mélanges. De préférence, la ferrite hexagonale magnétique est une ferrite hexagonale de type M.

De préférence ladite ferrite hexagonale magnétique, de préférence de type M, est choisie parmi les ferrites hexagonales comportant du fer, de préférence parmi les ferrites hexagonales comportant du fer d'une part, et du baryum et/ou du strontium et/ou du lanthane et/ou du calcium et/ou du cérium et/ou de l'aluminium et/ou du cobalt et/ou du titane et/ou du gallium et/ou de l'indium et/ou du manganèse et/ou du zinc et/ou du nickel et/ou du cuivre et/ou du chrome et/ou du magnésium d'autre part, et leurs mélanges.

De préférence, ladite ferrite hexagonale, de préférence de type M, est choisie parmi les ferrites hexagonales comportant du fer et du baryum, du fer et du strontium, du fer et du baryum et du cobalt et du titane, du fer et du strontium et du cobalt et du titane, du fer et du baryum et du cobalt, du fer et du lanthane et de l'aluminium, du fer et du baryum et de l'aluminium, du fer et du strontium et de l'aluminium, du fer et du baryum et de l'aluminium et du calcium, du fer et du baryum et de l'aluminium et du calcium, et leurs mélanges.

De préférence, ladite ferrite hexagonale, de préférence de type M, est choisie parmi les ferrites hexagonales constituées, hors oxygène et pour plus de 80%, de préférence pour plus de 90%, de préférence pour plus de 95%, de préférence pour plus de 98% de leur masse, de fer et de baryum, de fer et de strontium, de fer et de baryum et de cobalt et de titane, de fer et de strontium et de cobalt et de titane, de fer et de baryum et de cobalt, de fer et de lanthane et d'aluminium, de fer et de baryum et d'aluminium, de fer et de strontium et d'aluminium, de fer et du baryum et de l'aluminium et du calcium, de fer et du baryum et de l'aluminium et du calcium, et leurs mélanges.

De préférence encore, ladite ferrite hexagonale, de préférence de type M, est choisie parmi les ferrites hexagonales constituées, hors oxygène et pour plus de 80%, de préférence pour plus de 90%, de préférence pour plus de 95%, de préférence pour plus de 98% de leur masse, de fer et de lanthane et d'aluminium, de fer et de baryum, de fer et de strontium, de fer et de baryum et d'aluminium, de fer et de baryum et de strontium, et leurs mélanges.

De préférence, la bille selon l'invention présente une teneur en constituant magnétique supérieure ou égale à 5%, de préférence supérieure ou égale à 6%, de préférence supérieure ou égale à 7%, de préférence supérieure ou égale à 8%, et de préférence inférieure ou égale à 21%, de préférence inférieure ou égale à 20%, de préférence inférieure ou égale à 18%, de préférence inférieure ou égale à 15%, en pourcentages en masse sur la base des phases cristallisées et pour un total de 100%.

De préférence, la bille selon l'invention présente une aimantation massique supérieure à 1 A.m².kg⁻¹, de préférence supérieure à 2 A.m².kg⁻¹, de préférence supérieure à 3 A.m².kg⁻¹, de préférence supérieure à 4 A.m².kg⁻¹, mesurée à un champ magnétique d'excitation égal à 100 kA/m.

La bille frittée selon l'invention présente de préférence une teneur totale en phases cristallisées autres que zircone stabilisée, zircone monoclinique et constituant magnétique, en pourcentage en masse sur la base de la quantité totale de phases cristallisées, inférieure à 6%, de préférence inférieure à 5%, voire inférieure à 4%.

Dans un mode de réalisation préféré, la bille frittée selon l'invention présente les phases cristallisées suivantes, en pourcentages en masse sur la base des phases cristallisées et pour un total de 100% :
- zircone stabilisée : complément à 100% ;
- zircone monoclinique : ≤ 20%, de préférence inférieure ou égale à 15%, de préférence inférieure ou égale à 10%, de préférence inférieure ou égale à 7%, de préférence inférieure ou égale à 5%, de préférence sensiblement nulle ;
- constituant magnétique : teneur supérieure ou égale à 4%, de préférence supérieure ou égale à 5%, de préférence supérieure ou égale à 6%, de préférence supérieure ou égale à 7%, de préférence supérieure ou égale à 8%, et de préférence inférieure ou égale à 21%, de préférence inférieure ou égale à 20%, de préférence inférieure ou égale à 18%, de préférence inférieure ou égale à 15% ;
- phases cristallisées autres que zircone stabilisée, zircone monoclinique, et constituant magnétique : < 7%, de préférence inférieure à 6%, de préférence inférieure à 5%, voire inférieure à 4% ;
le constituant magnétique étant choisi parmi les spinelles comportant
- du fer et du zinc et du cuivre,
- du fer et du cuivre et de l'aluminium,
- du fer et du nickel,
- du fer et du cobalt,
- du fer et du cuivre,
- du fer et du zinc,
- du fer et du magnésium,
- du fer et du manganèse,
- du fer et du nickel et du zinc,
- du fer et du nickel et du zinc et du cuivre,
- du fer et du manganèse et du zinc,
- du fer et du manganèse et du zinc et de l'aluminium,
- du fer et du lithium et du zinc et du nickel et du manganèse,
- du fer et du zinc et du lithium,
- du fer et du zinc et du cuivre et de l'aluminium et du calcium,
- et leurs mélanges, et
parmi les ferrites hexagonales, de préférence de type M, choisies parmi les ferrites hexagonales comportant
- du fer et du baryum,
- du fer et du strontium,
- du fer et du baryum et du cobalt et du titane,
- du fer et du strontium et du cobalt et du titane,
- du fer et du baryum et du cobalt,
- du fer et du lanthane et de l'aluminium,
- du fer et du baryum et de l'aluminium,
- du fer et du strontium et de l'aluminium,
- du fer et du baryum et de l'aluminium et du calcium,
- du fer et du baryum et de l'aluminium et du calcium,
- et leurs mélanges, et leurs mélanges,
ladite zircone stabilisée étant stabilisée avec CeO₂ et optionnellement avec Y₂O₃, les teneurs en CeO₂ et Y₂O₃, hors constituant magnétique, en pourcentages molaires sur la base de la somme de ZrO₂, de CeO₂ et de Y₂O₃, étant telles que :
- CeO₂ est supérieure ou égale à 2%, de préférence supérieure ou égale à 3%, de préférence supérieure ou égale à 5%, et de préférence inférieure ou égale à 16%, de préférence inférieure ou égale à 15%, et
- Y₂O₃ + (CeO₂)/3,5 est supérieure ou égale à 2%, de préférence supérieure ou égale à 2,5%, et inférieure ou égale à 4%,
ladite bille frittée présentant une quantité massique de phase amorphe, en pourcentage en masse par rapport à la masse de ladite bille frittée, inférieure à 7%, de préférence inférieure à 5%, de préférence sensiblement nulle.

La composition de la bille frittée est principalement constituée de ZrO₂, CeO₂, Y₂O₂ et des oxydes des éléments du constituant magnétique.

Dans un mode de réalisation, la bille frittée selon l'invention présente une teneur en Al₂O₃ supérieure ou égale à 0,2%, de préférence supérieure ou égale à 0,25% et, de préférence inférieure à 3%, de préférence inférieure ou égale à 2,5%, de préférence inférieure ou égale à 2%, de préférence inférieure ou égale à 1,2%, de préférence inférieure ou égale à 1%, de préférence inférieure ou égale à 0,8%, de préférence inférieure ou égale à 0,5%, en pourcentages en masse sur la base des oxydes, ladite teneur en Al₂O₃ ne prenant pas en compte la teneur en aluminium, exprimée sous la forme Al₂O₃, éventuellement présent dans le constituant magnétique.

La bille frittée selon l'invention présente de préférence, une teneur en CaO inférieure à 1,5%, de préférence inférieure à 1,0%, en pourcentages en masse sur la base des oxydes, ladite teneur en CaO ne prenant pas en compte la teneur en calcium, exprimée sous la forme CaO, éventuellement présent dans le constituant magnétique.

Dans un mode de réalisation, la bille frittée selon l'invention présente une teneur en CaO supérieure à 0,1%, de préférence supérieure à 0,2%, de préférence supérieure à 0,3%, en pourcentage en masse sur la base des oxydes, ladite teneur en CaO ne prenant pas en compte la teneur en calcium, exprimée sous la forme CaO, éventuellement présent dans le constituant magnétique.

De préférence, la bille frittée selon l'invention présente une densité surfacique de pores, mesurée sur des clichés pris en Microscopie Electronique à Balayage, inférieure à 5%, de préférence inférieure à 4%, de préférence inférieure à 2%, de préférence inférieure à 1%.

La bille frittée selon l'invention présente de préférence une taille inférieure à 10 mm, de préférence inférieure à 8 mm, et/ou supérieure à 0,01 mm, de préférence supérieure à 0,02 mm, de préférence supérieure à 0,03 mm. Dans un mode de réalisation, la bille frittée selon l'invention présente de préférence une taille inférieure à 8 mm, de préférence inférieure à 7 mm et supérieure à 2 mm, de préférence supérieure à 3 mm.

Une bille frittée selon l'invention présente de préférence une sphéricité supérieure à 0,7, de préférence supérieure à 0,8, de préférence supérieure à 0,85, voire supérieure à 0,9.

### Procédé de fabrication des billes frittées

Pour fabriquer des billes frittées selon l'invention, on peut procéder suivant les étapes a) à g) décrites ci-dessus et détaillées ci-dessous.

**A l'étape a),** on prépare un mélange particulaire présentant une taille médiane inférieure à 2 µm. La composition du mélange particulaire est adaptée, d'une manière connue en soi, pour que les billes frittées aient une composition conforme à l'invention.

Les poudres de matières premières sont mélangées intimement.

Les poudres de matières premières peuvent être broyées individuellement ou, de préférence, cobroyées afin que le mélange particulaire obtenu présente une taille médiane inférieure à 2 µm, de préférence inférieure à 1,5 µm, de préférence inférieure à 1 µm, de préférence inférieure à 0,8 µm, de préférence inférieure à 0,6 µm, de préférence inférieure à 0,5 µm, de préférence inférieure à 0,4 µm, de préférence inférieure à 0,3 µm et/ou de préférence supérieure à 0,05 µm. Ce broyage peut être un broyage humide. Un broyage ou un cobroyage peuvent être également utilisés pour obtenir un mélange intime.

Y₂O₃ et CeO₂ sont des stabilisants connus de la zircone. Dans le mélange particulaire, ils peuvent stabiliser ou non la zircone. Selon l'invention, le mélange particulaire doit cependant conduire à une bille frittée selon l'invention.

La cérine et/ou un précurseur de cérine et/ou l'yttrine et/ou un précurseur d'yttrine peuvent, partiellement ou totalement, être incorporés dans le mélange particulaire sous une forme séparée de la zircone, de manière qu'après frittage, la zircone soit au moins en partie stabilisée. Dans ce mode de réalisation, la taille médiane de la poudre d'yttrine et/ou du précurseur d'yttrine et/ou de cérine et/ou du précurseur de cérine est de préférence inférieure à 1 µm, de préférence inférieure à 0,5 µm, de préférence encore inférieure à 0,3 µm. L'efficacité de la stabilisation de la zircone en est avantageusement améliorée lors du frittage.

Dans un mode de réalisation, le mélange particulaire comporte une poudre de zircone monoclinique comme seule source de zircone, et une poudre de cérine comme seule source de CeO₂. La zircone n'est stabilisée avec CeO₂ qu'en fin d'étape g).

Dans un mode de réalisation, le mélange particulaire comporte une poudre de cérine comme seule source de CeO₂ et une poudre de zircone au moins en partie stabilisée avec Y₂O₃ comme seule source de zircone. La zircone ne devient stabilisée avec CeO₂ et Y₂O₃ qu'en fin d'étape g). De préférence, la poudre de zircone au moins en partie stabilisée avec Y₂O₃ présente une aire spécifique, calculée par la méthode BET, supérieure à 0,5 m²/g, de préférence supérieure à 1 m²/g, de préférence supérieure à 1,5 m²/g, et/ou inférieure à 20 m²/g, de préférence inférieure à 18 m²/g, de préférence inférieure à 15 m²/g. Avantageusement, le broyage optionnel, généralement en suspension, en est facilité.

Dans un mode de réalisation, le mélange particulaire comporte des particules dans lesquelles de la zircone, stabilisée ou non, et de la cérine et/ou de l'yttrine sont intimement mélangées. Un tel mélange intime peut par exemple être obtenu par co-précipitation ou atomisation, et éventuellement consolidé par un traitement thermique. Dans un tel mélange particulaire, la cérine et/ou l'yttrine peuvent être remplacés par une quantité équivalente de précurseur(s).

De préférence, le mélange particulaire ne comporte pas de précurseur d'yttrine.

De préférence, le mélange particulaire ne comporte pas de précurseur de cérine.

De préférence, le mélange particulaire ne comporte pas de précurseur de zircone.

De préférence, lorsque la bille frittée comporte de la zircone stabilisée avec CeO₂ et Y₂O₃ en fin d'étape g), le mélange particulaire ne comporte pas de poudre de zircone monoclinique.

Dans un mode de réalisation, en particulier lorsque le constituant magnétique ne comporte sensiblement pas de ZrO₂, ni de CeO₂, ni d'Y₂O₃, et lorsque la bille frittée comporte de la zircone seulement stabilisée avec CeO₂ en fin d'étape g), la teneur en CeO₂ dans le mélange particulaire est supérieure ou égale à 3%, de préférence supérieure ou égale à 5%, de préférence supérieure ou égale à 7% et/ou inférieure à 17,5%, de préférence inférieure à 14%, de préférence inférieure à 12%, en pourcentages molaires sur la base de la somme de ZrO₂, Y₂O₃ et CeO₂ présents dans ledit mélange particulaire.

Dans un mode de réalisation, en particulier lorsque le constituant magnétique ne comporte sensiblement pas de ZrO₂, ni de CeO₂, ni d'Y₂O₃, et lorsque la bille frittée comporte de la zircone stabilisée avec CeO₂ et Y₂O₃ en fin d'étape g), la teneur en CeO₂ dans le mélange particulaire est supérieure ou égale à 1,5%, de préférence supérieure ou égale à 2%, de préférence supérieure ou égale à 3% et/ou de préférence inférieure ou égale à 17,5%, de préférence inférieure ou égale à 16%, de préférence inférieure ou égale à 15%, et la teneur en Y₂O₃ est telle que Y₂O₃ + (CeO₂)/3,5 est supérieure ou égale à 1,5%, de préférence supérieure ou égale à 2%, de préférence supérieure ou égale à 2,5%, et de préférence inférieure ou égale à 5%, de préférence inférieure ou égale à 4%, en pourcentages molaires sur la base de la somme de ZrO₂, Y₂O₃ et CeO₂ présents dans ledit mélange particulaire.

Le mélange particulaire comporte également une poudre du constituant magnétique et/ou de précurseur(s) du constituant magnétique introduit dans des quantités équivalentes. Les précurseurs du constituant magnétique peuvent être des matières premières apportant les oxydes constituant le constituant magnétique dans la bille frittée à l'issue de l'étape g).

De préférence, le mélange particulaire ne comporte pas de poudre de constituant magnétique, mais des poudres de précurseurs de constituant magnétique présentant chacune une taille médiane inférieure à 5 µm, inférieure à 3 µm, inférieure à 2 µm, inférieure à 1 µm, inférieure à 0,7 µm, de préférence inférieure à 0,6 µm, de préférence inférieure à 0,5 µm. L'homme du métier sait adapter les quantités de ces poudres pour obtenir la quantité souhaitée de constituant magnétique dans la bille frittée. Une partie des poudres de précurseurs peut ne pas se combiner pour former du constituant magnétique.

Dans un mode de réalisation, le mélange particulaire comporte une poudre d'alumine en une quantité supérieure ou égale à 0,2%, de préférence supérieure ou égale à 0,25% et de préférence inférieure à 3%, de préférence inférieure ou égale à 2,5%, de préférence inférieure ou égale à 2%, de préférence inférieure ou égale à 1,2%, de préférence inférieure ou égale à 1%, de préférence inférieure ou égale à 0,8%, en pourcentages en masse sur la base de la masse du mélange particulaire. Avantageusement, l'aptitude au frittage du mélange particulaire en est améliorée. L'alumine peut être remplacée, en partie ou en totalité, par une quantité équivalente de précurseur d'alumine. De préférence, le mélange particulaire ne comporte pas de précurseur d'alumine. De préférence encore, l'alumine est sensiblement exclusivement présente sous la forme de corindon. La poudre de corindon présente de préférence une taille médiane inférieure à 5 µm, de préférence inférieure à 3 µm, de préférence inférieure à 1 µm.

De préférence, les poudres utilisées dans le mélange particulaire présentent chacune une taille médiane inférieure à 5 µm, de préférence inférieure à 3 µm, de préférence inférieure à 2 µm, de préférence inférieure à 1 µm, de préférence inférieure à 0,7 µm, de préférence inférieure à 0,6 µm, de préférence inférieure à 0,5 µm, de préférence inférieure à 0,4 µm, voire inférieure à 0,3 µm.

Quel que soit le mode de réalisation, une ou plusieurs des poudres du mélange particulaire décrites précédemment peuvent être remplacées, au moins partiellement, par des poudres de précurseurs équivalentes, c'est-à-dire par des poudres qui, lors de la fabrication d'une bille selon l'invention, conduisent, dans ladite bille, aux mêmes constituants (même composition, même phase cristallographique), dans les mêmes quantités.

**A l'étape b),** optionnelle, le mélange particulaire peut être séché, par exemple en étuve ou par atomisation, en particulier s'il a été obtenu par broyage humide ou si au moins une poudre de matière première a été obtenue par broyage humide. De préférence, la température et/ou la durée de l'étape de séchage sont adaptées de manière à ce que l'humidité résiduelle du mélange particulaire soit inférieure à 2%, voire inférieure à 1,5%.

**A l'étape c),** on prépare, de préférence à température ambiante, une charge de départ comportant le mélange particulaire obtenu en fin d'étape a) ou en fin d'étape b) et, optionnellement, un solvant, de préférence de l'eau.

Comme cela est bien connu de l'homme du métier, la charge de départ est adaptée au procédé de mise en forme de l'étape d).

La mise en forme peut en particulier résulter d'un procédé de gélification. A cet effet, un solvant, de préférence de l'eau, est de préférence ajouté à la charge de départ de manière à réaliser une suspension.

La suspension présente de préférence une teneur massique en matière sèche comprise entre 50% et 70%.

La suspension peut encore comporter un ou plusieurs des constituants suivants :
- un dispersant, à raison de 0 à 10%, en pourcentage massique sur la base de la matière sèche ;
- un modificateur de tension de surface, à raison de 0 à 3%, en pourcentage massique sur la base de la matière sèche ;
- un agent gélifiant, ou « agent de gélification », à raison de 0 à 2%, en pourcentage massique sur la base de la matière sèche.

Les dispersants, modificateurs de tension de surface et agents gélifiants sont bien connus de l'homme du métier.

A titre d'exemples, on peut citer,
- comme dispersants, la famille des polyméthacrylates de sodium ou d'ammonium, la famille des polyacrylates de sodium ou d'ammonium, la famille des citrates, par exemple d'ammonium, la famille des phosphates de sodium, et la famille des esters de l'acide carbonique ;
- comme modificateurs de tension de surface, les solvants organiques tels que des alcools aliphatiques ;
- comme agents gélifiants, des polysaccharides naturels.

Le mélange particulaire est de préférence ajouté dans un mélange d'eau et de dispersants/défloculants dans un micro-broyeur. Après agitation, on ajoute de l'eau dans laquelle a été préalablement dissout un agent gélifiant de manière à obtenir une suspension.

Si la mise en forme résulte d'une extrusion, des polymères thermoplastiques ou des polymères thermodurcissables peuvent être ajoutés à la charge de départ, ladite charge de départ ne contenant de préférence pas de solvant.

**A l'étape d),** tout procédé conventionnel de mise en forme connu pour la fabrication de billes frittées peut être mis en oeuvre.

Parmi ces procédés, on peut citer :
- les procédés de granulation, mettant par exemple en oeuvre des granulateurs, des granulateurs à lit fluidisé, ou des disques de granulation,
- les procédés de gélification,
- les procédés de moulage par injection ou extrusion, et
- les procédés de pressage.

Dans un procédé de gélification, des gouttes de la suspension décrite ci-dessus sont obtenues par écoulement de la suspension à travers un orifice calibré. Les gouttes sortant de l'orifice tombent dans un bain d'une solution de gélification (électrolyte adapté pour réagir avec l'agent gélifiant) où elles durcissent après avoir recouvré une forme sensiblement sphérique.

**A l'étape e),** optionnelle, les billes crues obtenues lors de l'étape précédente sont lavées, par exemple à l'eau.

**A l'étape f),** optionnelle, les billes crues, éventuellement lavées, sont séchées, par exemple à l'étuve.

**A l'étape g),** les billes crues, éventuellement lavées et/ou séchées, sont frittées. De préférence, le frittage s'effectue sous air, de préférence dans un four électrique, de préférence à pression atmosphérique.

Le frittage à l'étape g) est effectué à une température de préférence supérieure à 1200°C, de préférence supérieure à 1250°C, et de préférence inférieure à 1600°C, de préférence inférieure à 1550°C, de préférence inférieure à 1500°C, de préférence inférieure à 1450°C, de préférence inférieure à 1400°C.

La durée de maintien au palier de température est de préférence supérieure à 1 heure et/ou de préférence inférieure à 10 heures, de préférence inférieure à 7 heures, de préférence inférieure à 5 heures, de préférence inférieure à 3 heures. De préférence, la durée de frittage est comprise entre 1 et 3 heures.

Les billes frittées obtenues présentent de préférence une taille supérieure à 0,01 mm et inférieure à 10 mm.

### Procédé de broyage, de dispersion, d'homogénéisation ou de séparation

Les billes frittées selon l'invention peuvent être utilisées dans un procédé comportant les étapes 1) et 2).

**A l'étape 1),** des billes selon l'invention sont mélangées avec une matière à broyer, disperser, homogénéiser, ou séparer, qui peut se présenter sous une forme d'une poudre ou d'une suspension ou d'une masse, par exemple un tissu animal, notamment pour en extraire de l'ADN.

Tous les procédés de mélange connus peuvent être envisagés.

L'agitation des billes, classiquement par mise en rotation du mélange obtenu, peut conduire à un broyage, une dispersion ou une homogénéisation de la partie solide de la matière à broyer, disperser ou homogénéiser.

La matière à broyer, disperser, homogénéiser, ou séparer peut être une matière organique, par exemple une matière alimentaire, par exemple du cacao.

La matière à disperser ou à homogénéiser peut être par exemple une peinture.

La matière à séparer peut être par exemple une poudre de particules non magnétiques. Le mélange peut être ainsi, par exemple, un mélange particulaire résultant d'une opération de traitement de surface par projection. Ce mélange peut comporter des billes et des fragments de billes selon l'invention projetées sur une surface, mais aussi des particules non magnétiques projetées sur la surface et/ou des fragments de telles particules magnétiques, et/ou des fragments d'un revêtement détachés de la surface lors de la projection. L'invention permet ainsi de séparer du mélange les billes et fragments de billes selon l'invention.

A la fin de l'étape 1), on obtient une charge dans laquelle sont mélangées des billes, des fragments de billes et la matière broyée, dispersée, homogénéisée ou à séparer.

Classiquement, les billes sont ensuite extraites de la charge. Selon l'invention, les fragments de billes, et même les billes, peuvent être avantageusement extraites magnétiquement à l'étape 2).

**A l'étape 2),** on applique un champ magnétique à la charge obtenue à l'issue de l'étape 1), et donc aux billes et fragments de billes qu'elle contient. Ce champ magnétique attire exclusivement les constituants « magnétiques », ce qui permet leur extraction.

En réglant la force du champ magnétique, il est possible d'ajuster la taille des objets (billes frittées et/ou fragments de billes frittées) qui sont extraits : plus la force du champ magnétique appliqué est élevée, plus la taille de ces objets est grande.

Ce procédé permet avantageusement de séparer sensiblement entièrement les billes frittées selon l'invention et les fragments desdites billes frittées selon l'invention.

Le champ magnétique peut être appliqué par toute technique connue de l'homme du métier, dont des aimants, en particulier des aimants permanents en ferrites dures, des aimants permanents en alliage AINiCo, des électro-aimants, ou des bobines supraconductrices.

### Procédé de nettoyage d'une surface traitée par projection de billes selon l'invention

**A l'étape 1'),** des billes selon l'invention peuvent être projetées, au moyen d'un appareil de projection, seules ou en mélange avec d'autres médias, sur une surface d'une pièce pour en modifier les caractéristiques, par exemple pour en modifier l'aspect ou supprimer un revêtement. La surface à traiter peut être par exemple une surface métallique.

Après projection, on applique un champ magnétique sur les médias projetés de manière à en extraire des fragments des billes selon l'invention et/ou des billes selon l'invention.

Après projection, on peut également appliquer un champ magnétique sur au moins une partie de la surface de la pièce traitée de manière à en extraire des fragments des billes selon l'invention et/ou des billes selon l'invention, qui auraient pu par exemple rester dans un trou borgne de la pièce.

### Procédé de nettoyage d'un appareil de projection de billes selon l'invention

Le nettoyage d'un appareil de projection nécessite de récupérer des billes restées dans cet appareil, notamment dans des coins ou dans des cavités de cet appareil. Un nettoyage mécanique peut être difficile.

L'application d'un champ magnétique sur une surface de l'appareil de projection permet de récupérer très facilement ces billes.

### Exemples

Les exemples non limitatifs suivants sont donnés dans le but d'illustrer l'invention.

### Protocoles de mesure

Les méthodes suivantes ont été utilisées pour déterminer certaines propriétés de différents mélanges de billes frittées. Elles permettent une excellente simulation du comportement réel en service dans l'application de microbroyage.

Pour déterminer la **sphéricité** d'une bille, les plus petit et plus grand diamètres de Ferret sont mesurés avec un Camsizer XT commercialisé par la société Horiba.

Pour déterminer la **résistance à l'usure dite « planétaire** », 20 ml (volume mesuré à l'aide d'une éprouvette graduée) de billes à tester, de taille comprise entre 0,9 et 1,2 mm, sont pesées (masse m₀) et introduites dans un des 4 bols revêtus d'alumine frittée dense, de contenance de 125 ml, d'un broyeur planétaire rapide du type PM400 de marque RETSCH. Sont ajoutés dans le même bol contenant déjà les billes, 2,2 g de carbure de silicium de marque Presi (présentant une taille médiane D₅₀ de 23 µm) et 40 ml d'eau. Le bol est refermé et mis en rotation (mouvement planétaire) à 400 tr/min avec inversion du sens de rotation toutes les minutes pendant 1h30. Le contenu du bol est ensuite lavé sur un tamis de 100 µm de manière à enlever le carbure de silicium résiduel ainsi que les arrachements de matière dus à l'usure lors du broyage. Après un tamisage sur un tamis de 100 µm, les billes sont séchées à l'étuve à 100 °C pendant 3h puis pesées (masse m₁). Lesdites billes (masse m₁) sont à nouveau introduites dans un des bols avec une suspension de SiC (même concentration et quantité que précédemment) et subissent un nouveau cycle de broyage, identique au précédent. Le contenu du bol est ensuite lavé sur un tamis de 100 µm de manière à enlever le carbure de silicium résiduel ainsi que les arrachements de matière dus à l'usure lors du broyage. Après un tamisage sur un tamis de 100 µm, les billes sont séchées à l'étuve à 100 °C pendant 3h puis pesées (masse m₂). Lesdites billes (masse m₂) sont à nouveau introduites dans un des bols avec une suspension de SiC (même concentration et quantité que précédemment) et subissent un nouveau cycle de broyage, identique au précédent. Le contenu du bol est ensuite lavé sur un tamis de 100 µm de manière à enlever le carbure de silicium résiduel ainsi que les arrachements de matière dus à l'usure lors du broyage. Après un tamisage sur un tamis de 100 µm, les billes sont séchées à l'étuve à 100 °C pendant 3h puis pesées (masse m₃).

L'usure planétaire (UP) est exprimée en pourcentage (%) et est égale à la perte de masse des billes ramenée à la masse initiale des billes, soit : 100.(m₀-m₃) / (m₀) ; le résultat UP est donné dans le tableau 1.

On considère que les résultats sont particulièrement satisfaisants si les produits présentent une résistance à l'usure planétaire (UP) qui se dégrade de moins de 5% par rapport à celle de l'exemple 1, exemple de référence. Une telle dégradation est acceptable car les billes peuvent être avantageusement facilement récupérées magnétiquement.

Les produits préférés présentent une résistance à l'usure planétaire (UP) améliorée d'au moins 5% par rapport à celle de l'exemple 1.

**La quantification des phases cristallisées** présentes dans les billes frittées selon l'invention est effectuée à partir d'échantillons de billes polies préparés selon la méthode suivante : pour chacun des exemples, une monocouche, sensiblement continue, de billes présentant une taille comprise entre 0,9 et 1,2 mm, est partiellement noyée dans de la résine acrylique, à une température égale à 180°C. Après durcissement et retour à la température ambiante, on obtient un bloc de résine.

Le diamètre extérieur du bloc de résine contenant les billes est égal à 25,4 mm.

Le bloc est poli à l'aide d'un papier abrasif présentant une taille de grains égale à 65 µm, jusqu'à pouvoir observer sensiblement le centre des billes. Le bloc est ensuite poli plus finement, l'avant dernière étape de polissage étant réalisée avec une préparation diamantée DiaPro Nap B 1µm commercialisée par la société Struers, et la dernière étape de polissage étant réalisée à l'aide d'une solution de silice colloïdale 0,04 µm.

L'acquisition du diagramme de diffraction est réalisée avec un appareil du type D8 Endeavor de la société Bruker, sur un domaine angulaire 2θ compris entre 5° et 100°, avec un pas de 0,01°, et un temps de comptage de 0,34 s/pas. L'optique avant comporte une fente primaire de 0,3° et une fente de Soller de 2,5°. Le bloc de résine poli comportant les billes est en rotation sur lui-même à une vitesse égale à 5 tr/min, avec utilisation du couteau automatique.

L'optique arrière comporte une fente de Soller de 2,5°, un filtre nickel de 0,0125 mm et un détecteur 1D avec une ouverture égale à 4°.

Les diagrammes de diffraction sont ensuite analysés qualitativement à l'aide du logiciel EVA et de la base de données ICDD2016.

Une fois les phases présentes mises en évidence, les diagrammes de diffraction sont analysés quantitativement avec le logiciel High Score Plus par affinement Rietveld selon la stratégie suivante :
- Un affinement du signal de fond est réalisé à l'aide de la fonction « treatment », « détermine background » avec les choix suivants : « bending factor » égal à 0 et « granularity » égal à 40. A noter que si un halo induit par la résine est observé, il est possible de tracer manuellement la ligne de base point par point ;
- Classiquement, les fiches ICDD des phases présentes mises en évidence et quantifiables sont sélectionnées, et donc prises en compte dans l'affinement ;
- Un affinement automatique est ensuite réalisé en sélectionnant le signal de fond déterminé précédemment « use available background » et en sélectionnant le mode « automatic : option phase fit-default Rietveld » ;
- Un affinement manuel du paramètre « B overall » de toutes les phases sélectionnées est ensuite effectué de manière simultanée.

La **quantité de phase amorphe** présente dans les billes frittées des exemples est mesurée par diffraction X, au moyen d'un appareil du type D8 Endeavor de la société Bruker. L'acquisition du diagramme de diffraction est réalisée à partir de cet équipement, de la même manière que pour la détermination des phases cristallisées présentes dans les billes, l'échantillon analysé se présentant sous la forme d'une poudre. La méthode appliquée consiste en l'ajout d'une quantité connue d'un étalon totalement cristallisé, dans le cas présent une poudre d'oxyde de zinc, ZnO en une quantité égale à 20%, sur la base de la masse d'oxyde de zinc et d'échantillon de billes frittées broyées selon l'invention. La taille maximale de la poudre d'oxyde de zinc est égale à 1 µm et les billes selon l'invention sont broyées de manière à obtenir une poudre présentant une taille maximale inférieure à 40 µm.

Après avoir réalisé l'affinement Rietveld, la taille maximale des particules de ZnO est entrée dans le logiciel High Score Plus de manière à limiter les effets de micro-absorption. La quantité massique des particules de ZnO est également entrée dans le logiciel High Score Plus.

La quantité massique de chaque phase présente, en pourcentage, est prise égale à la valeur « as received weight % » donnée par le logiciel High Score Plus.

La quantité massique de phase amorphe, en pourcentage sur la base de la masse de l'échantillon est égale au complément à 100 de la somme des quantités massiques des phases présentes.

Classiquement, si l'oxyde de zinc est présent parmi les phases cristallisées de l'échantillon à caractériser (ce qui n'est pas le cas dans les exemples ci-dessous), un autre oxyde non détecté comme une phase cristallisée dans l'échantillon à caractériser sera utilisé comme étalon.

La **densité surfacique de pores** des billes frittées est mesurée par la méthode suivante. Des images de surfaces polies de sections des billes frittées sont réalisées à l'aide d'un Microscope Electronique à Balayage, de manière à ce que chaque image soit une image rectangulaire présentant une longueur comprise entre 40 et 60 µm et une largeur comprise entre 35 µm et 50 µm. Pour chaque exemple, 10 images sont ainsi réalisées.

Pour chaque exemple, à l'aide du logiciel de traitement d'image ImageJ, la surface observée SOᵢ, et la surface couverte par les pores SPᵢ sont calculées pour chacune des images i. La surface observée totale SOT est égale à la somme de la surface totale observée, SOᵢ, sur chacune des images i. La surface totale couverte par les pores SPT est égale à la somme de la surface couverte par les pores SPᵢ, sur chacune des images i. La densité surfacique de pores, exprimée en pourcentage, est égale à SPT / SOT.

L**'analyse chimique** des billes frittées est déterminée par fluorescence X sur une perle fabriquée en fondant lesdites billes.

La **masse volumique apparente** des billes frittées des exemples, en g/cm³, est mesurée à l'aide d'un pycnomètre hélium (AccuPyc 1330 de la société Micromeritics^{®}), selon une méthode basée sur la mesure du volume de gaz déplacé (dans le cas présent l'hélium).

La **quantité de billes attirées par un aimant** est évaluée par la méthode suivante. 100 g de billes de chaque exemple, présentant une taille comprise entre 0,9 et 1,2 mm, sont disposés dans un récipient. Un aimant céramique avec une enveloppe en acier nickelé de diamètre extérieur 22 mm, de diamètre intérieur 16 mm, de hauteur 6 mm, présentant une attraction de 3 kg, commercialisé par la société Wilmart, est ensuite immergé 10 secondes dans les billes. L'aimant est ensuite retiré et les billes restées collées à l'aimant sont récupérées puis pesées. Cette masse M permet une comparaison rapide entre les billes des différents exemples. Une valeur élevée de ladite masse M est recherchée.

**L'aimantation massique** des billes frittées des exemples est déterminée à température ambiante à l'aide d'un magnétomètre à échantillon vibrant commercialisé par la société Lake Shore Cryotronics, lesdites billes étant soumises à un champ magnétique d'excitation égal à 2500 kA/m, ledit champ magnétique étant diminué jusqu'à une valeur égale à 100 kA/m, cette dernière valeur étant celle à laquelle la mesure d'aimantation massique est réalisée.

### Protocole de fabrication

Des billes frittées ont été préparées à partir :
- d'une poudre de zircone yttriée contenant une teneur molaire en Y₂O₃ égale à 1%, présentant une aire spécifique de l'ordre de 7 m²/g et une taille médiane égale à 1,1 µm pour les exemples 3, 8 et 9 ;
- d'une poudre de zircone yttriée contenant une teneur molaire en Y₂O₃ égale à 3%, présentant une aire spécifique de l'ordre de 13 m²/g et une taille médiane égale à 0,2 µm pour les exemples 7, 8 et 9 ;
- d'une poudre de cérine de pureté supérieure à 99% et présentant une taille médiane égale à 4,6 µm pour les exemples 2 à 6, et 8 à 9 ;
- d'une poudre d'alumine de pureté supérieure à 99,5% et de taille médiane égale à 0,4 µm pour les exemples 4 à 6, et 8 à 9 ;
- d'une poudre de zircone non stabilisée CZ-5, commercialisée par Saint-Gobain ZirPro, se présentant sous la forme cristallographique monoclinique, présentant une aire spécifique de l'ordre de 6 m²/g et une taille médiane égale à 4,5 µm pour les exemples 2, et 4 à 6 ;
- d'une poudre d'oxyde de zinc présentant une pureté massique en ZnO supérieure à 99% et une taille médiane égale à 0,3 µm pour les exemples 2 à 5, et 7 à 9 ;
- d'une poudre d'oxyde de cuivre présentant une pureté massique en CuO supérieure à 96% et une taille médiane égale à 1,3 µm pour les exemples 2 à 5, et 7 à 9 ;
- d'une poudre d'oxyde de fer Fe₂O₃ présentant une pureté massique en Fe₂O₃ supérieure à 97% et une taille médiane égale à 0,34 µm pour les exemples 2 à 9 ;
- d'une poudre d'oxyde de lanthane La₂O₃ présentant une pureté massique en La₂O₃ supérieure à 99,5% et une taille médiane égale à 7 µm pour l'exemple 6.

La poudre de billes frittées de l'exemple 1, hors invention, est une poudre de billes de Zirmil-Ce commercialisées par la société Saint-Gobain Zirpro, présentant une taille comprise entre 0,9 et 1,2 mm.

Le tableau 1 résume les caractéristiques des mélanges particulaires des exemples.

Ces poudres ont été mélangées puis cobroyées en milieu humide jusqu'à obtention d'un mélange particulaire présentant une taille médiane inférieure à 0,4 µm. Le mélange particulaire a ensuite été séché.

Une charge de départ consistant en une suspension aqueuse comportant, en pourcentages en pourcentage massique sur la base de la matière sèche, 2% d'un dispersant de type acide carboxylique et 2% d'un agent gélifiant, à savoir un polysaccharide de la famille des alginates, a ensuite été préparée à partir de ce mélange particulaire.

Un micro-broyeur a été utilisé pour cette préparation de manière à obtenir une bonne homogénéité de la charge de départ : Une solution contenant l'agent gélifiant a d'abord été formée. Successivement on a ajouté dans de l'eau, le mélange particulaire et les dispersants. La solution contenant l'agent gélifiant a ensuite été ajoutée. Le mélange ainsi obtenu a été agité pendant 8 heures. La taille des particules a été contrôlée à l'aide d'un granulomètre par diffraction laser Partica LA-950 commercialisé par la société Horiba Scientific (taille médiane < 0,4µm), et de l'eau a été ajoutée en une quantité déterminée pour obtenir une suspension aqueuse à 68% en matière sèche et une viscosité, mesurée au viscosimètre Brookfield à l'aide du mobile LV3 à une vitesse égale à 20 tours/minute, inférieure à 5000 centipoises. Le pH de la suspension était alors d'environ 9 après ajustement à l'aide d'une base forte.

La suspension a été forcée à travers un trou calibré et à un débit permettant d'obtenir après frittage des billes présentant une taille d'environ 1 mm. Les gouttes de suspension tombaient dans un bain de gélification à base d'un électrolyte (sel de cation divalent), réagissant avec l'agent gélifiant. Les billes crues ont été collectées, lavées, puis séchées à 80°C pour éliminer l'humidité. Les billes ont ensuite été transférées dans un four de frittage où elles ont été portées, à une vitesse de 100°C/h, jusqu'à la température égale à 1250°C pour les exemples 2 et 4 à 9 et à 1275°C pour l'exemple 3. A la fin d'un palier de 4 heures à cette température, la descente en température a été effectuée par refroidissement naturel.

### Résultats

Les résultats obtenus sont résumés dans les tableaux 2 à 4 ci-dessous.

**[Tableau 1]**

| Exemples | 1(*) | 2 | 3 | 4 | 5(*) | 6 | 7(*) | 8(*) | 9 |
|---|---|---|---|---|---|---|---|---|---|
| Composition du mélange particulaire (pourcentages massiques) | | | | | | | | | |
| Poudre de zircone yttriée contenant une teneur molaire en Y₂O₃ égale à 1% | - | - | 81,87 | - | - | - | - | 11,62 | 36,24 |
| Poudre de cérine | - | 14,78 | 9,10 | 13,08 | 11,86 | 14,80 | - | 1,27 | 6,64 |
| Poudre de zircone non stabilisée CZ-5 | - | 75,16 | - | 66,56 | 60,79 | 75,20 | - | - | |
| Poudre de zircone yttriée contenant une teneur molaire en Y₂O₃ égale à 3% | - | - | - | - | - | - | 90,00 | 76,86 | 46,80 |
| Poudre d'alumine | - | - | - | 0,33 | 0,30 | 0,71 | - | 0,30 | 0,30 |
| Poudre d'oxyde de zinc | - | 1,71 | 1,53 | 3,40 | 4,59 | - | 1,69 | 1,69 | 1,70 |
| Poudre d'oxyde de cuivre | - | 1,67 | 1,50 | 3,32 | 4,48 | - | 1,66 | 1,65 | 1,66 |
| Poudre d'oxyde de fer | - | 6,68 | 6,00 | 13,31 | 17,98 | 7,78 | 6,65 | 6,61 | 6,66 |
| Poudre d'oxyde de lanthane | - | - | - | - | - | 1,51 | - | - | - |

| | | | | | | | | | |
|---|---|---|---|---|---|---|---|---|---|
| (*) : hors invention | | | | | | | | | |

**[Tableau 2]**

| **Exemples** | 1 (*) | 2 | 3 | 4 | 5(*) | 6 | 7(*) | 8(*) | 9 |
|---|---|---|---|---|---|---|---|---|---|
| Analyse chimique, en pourcentages en masse sur la base des oxydes sauf indication contraire | | | | | | | | | |
| ZrO₂ (%) | 82 | 74,7 | 79,7 | 68,1 | 59,4 | 75,4 | 83,8 | 83,8 | 79,1 |
| CeO₂ (%) | 16 | 14,8 | 9,6 | 12,7 | 11 | 14,2 | - | 1,3 | 6,5 |
| Y₂O₃ (%) | - | - | 1,7 | - | - | - | 5,0 | 4,6 | 3,2 |
| ZnO (%) | - | 1,2 | 1,2 | 2,3 | 5,1 | - | 1,8 | 1,2 | 1,7 |
| CuO (%) | - | 1,4 | 1,1 | 3 | 4,4 | - | 1,6 | 1,5 | 1,4 |
| Fe₂O₃ (%) | - | 6,3 | 6,1 | 13 | 19,2 | 7,3 | 6,5 | 6,3 | 6,8 |
| La₂O₃ (%) | - | - | - | - | - | 1,2 | - | - | |
| Al₂O₃ (%) | 0,5 | 0,4 | - | 0,3 | 0,4 | 1,2 | 0,5 | 0,6 | 0,6 |
| CaO (%) | 0,3 | 0,7 | 0,3 | 0,3 | 0,3 | 0,3 | 0,4 | 0,1 | 0,3 |
| Oxydes autres que ZrO₂, CeO₂, Y₂O₃, ZnO, CuO, Fe₂O₃, La₂O₃, Al₂O₃, et CaO (%) | 1,2 | 0,5 | 0,3 | 0,3 | 0,2 | 0,4 | 0,4 | 0,6 | 0,4 |
| CeO₂ en % molaire sur la base de la somme de ZrO₂, HfO₂,CeO₂ et Y₂O₃ | 12,2 | 12,4 | 7,8 | 11,8 | 11,7 | 11,9 | 0 | 1,1 | 5,4 |
| Y₂O₃ en % molaire sur la base de la somme de ZrO₂, HfO₂, CeO₂ et Y₂O₃ | 0 | 0 | 1,1 | 0 | 0 | 0 | 3,1 | 2,9 | 2 |
| Y₂O₃ + CeO₂/3,5, en % molaire | 3,5 | 3,5 | 3,3 | 3,4 | 3,3 | 3,4 | 3,1 | 3,2 | 3,5 |

| | | | | | | | | | |
|---|---|---|---|---|---|---|---|---|---|
| (*) : hors invention | | | | | | | | | |

**[Tableau 3]**

| **Exemples** | 1(*) | 2 | 3 | 4 | 5(*) | 6 | 7(*) | 8(*) | 9 |
|---|---|---|---|---|---|---|---|---|---|
| Phases cristallisées, en pourcentage en masse sur la base de la masse des phases cristallisées | | | | | | | | | |
| Zircone stabilisée avec CeO₂ et optionnellement Y₂O₃ | 95 | 87 | 89 | 79 | 68 | 92 | 46 | 48 | 86 |
| Zircone monoclinique | 5 | 5 | 5 | 5 | 7 | Complément à 100 | 46 | 42 | 6 |
| Spinelle magnétique | - | 8 | 6 | 16 | 25 | - | 8 | 10 | 8 |
| Nature dudit spinelle | - | Spinelle comportant du fer et du zinc et du cuivre | Spinelle comportant du fer et du zinc et du cuivre | Spinelle comportant du fer et du zinc et du cuivre | Spinelle comportant du fer et du zinc et du cuivre | - | Spinelle comportant du fer et du zinc et du cuivre | Spinelle comportant du fer et du zinc et du cuivre | Spinelle comportant du fer et du zinc et du cuivre |
| Ferrite hexagonale de type M magnétique | - | - | - | - | - | 6 | - | - | - |
| Nature de ladite ferrite hexagonale | - | - | - | - | - | Ferrite hexagonale de type M comportant du fer et du lanthane et de l'aluminium | - | - | - |

| | | | | | | | | | |
|---|---|---|---|---|---|---|---|---|---|
| (*) : hors invention | | | | | | | | | |

**[Tableau 4]**

| Exemples | 1(*) | 2 | 3 | 4 | 5(*) | 6 | 7(*) | 8(*) | 9 |
|---|---|---|---|---|---|---|---|---|---|
| **Caractéristiques** | | | | | | | | | |
| Masse volumique apparente des billes (g/cm³) | 6,20 | 6,10 | 6,05 | 6,00 | 5,93 | 6,00 | 5,79 | 5,81 | 6,01 |
| Usure planétaire UP (en %) | 2,3 | 2 | 1,9 | 2,1 | 3 | 1,8 | 3,3 | 2,5 | 1,6 |
| Amélioration UP% / exemple 1 | - | 13% | 17,4% | 8,7% | -30% | 21,7% | -43,5% | -8,7% | 30,4% |
| Masse M de billes attirées par un aimant (en g) | 0 | 10 | 9,1 | 13,6 | 15,5 | 1,3 | 8,2 | 9,3 | 9,2 |
| Aimantation massique (A.m².kg⁻¹) | n.d. | 4,5 | n.d. | n.d. | 13 | 1,7 | n.d. | n.d. | n.d. |

| | | | | | | | | | |
|---|---|---|---|---|---|---|---|---|---|
| (*) : hors invention n.d. : non déterminé | | | | | | | | | |

Les poudres de billes des exemples présentent une sphéricité moyenne supérieure à 0,9.

Les billes des exemples 2 à 9 présentent une quantité de phase amorphe sensiblement nulle ainsi qu'une densité surfacique de porcs inférieure à 1%.

Avant d'effectuer la quantification des phases cristallisées par diffraction des rayons X. des pointés réalisés à l'aide d'une microsonde électronique ont révélé la présence d'une phase comportant du fer et du cuivre et du zinc dans les billes des exemples 2 à 5 et 7 à 9, et une phase comportant du fer et du lanthane et de l'aluminium dans les billes de l'exemple 6.

Une comparaison de l'exemple 1 de référence hors invention, et de l'exemple 2 selon l'invention, montre que les billes selon l'exemple 2, comportant de la zircone stabilisée avec CeO₂. une teneur molaire en CeO₂ égale à 12,4%, et présentant une teneur en spinelle comportant du fer et du zinc et du cuivre égale à 8% sur la base de la masse des phases cristallisées, sont attirées par un aimant, contrairement aux billes de l'exemple de référence 1, la poudre de billes de l'exemple 2 présentant une usure UP% égale à 2%, c'est-à-dire 13% inférieure à l'usure UP% de la poudre de billes de l'exemple 1 de référence hors invention.

Une comparaison de l'exemple 1 de référence hors invention, et de l'exemple 3 selon l'invention, montre que les billes selon l'exemple 3, comportant de la zircone stabilisée avec CeO₂ et Y₂O₃, les teneurs molaires en CeO₂ et en Y₂O₃ étant égales à 7,8% et 1,1%, respectivement, et présentant une teneur en spinelle comportant du fer et du zinc et du cuivre égale à 6% sur la base de la masse des phases cristallisées, sont attirées par un aimant, contrairement aux billes de l'exemple de référence 1, la poudre de billes de l'exemple 3 présentant une usure UP% égale à 1,9%, c'est-à-dire 17,4% inférieure à l'usure UP% de la poudre de billes de l'exemple 1 de référence hors invention.

Une comparaison de l'exemple 1 de référence hors invention, et de l'exemple 4 selon l'invention, montre que les billes selon l'exemple 4, comportant de la zircone stabilisée avec CeO₂, une teneur molaire en CeO₂ égale à 11,8% et présentant une teneur en spinelle comportant du fer, du zinc et du cuivre égale à 16% sur la base de la masse des phases cristallisées, sont attirées par un aimant, contrairement aux billes de l'exemple de référence 1, la poudre de billes de l'exemple 4 présentant une usure UP% égale à 2,1%, c'est-à-dire 8,7% inférieure à l'usure UP% de la poudre de billes de l'exemple 1 de référence hors invention.

Une comparaison de l'exemple 1 de référence hors invention, et de l'exemple 5 hors invention, montre que les billes selon ledit exemple 5, comportant de la zircone stabilisée CeO₂, une teneur molaire en CeO₂ égale à 11,7%, et présentant une teneur en spinelle comportant du fer, du zinc et du cuivre égale à 25% sur la base de la masse des phases cristallisées, sont attirées par un aimant, contrairement aux billes de l'exemple de référence 1, la poudre de billes de l'exemple 5 présentant par ailleurs une usure UP% égale à 3%, c'est-à-dire 30% supérieure à l'usure UP% de la poudre de billes de l'exemple 1 de référence hors invention.

Une comparaison de l'exemple 1 de référence hors invention, et de l'exemple 6 selon l'invention, montre que les billes selon l'exemple 6, comportant de la zircone stabilisée avec CeO₂, une teneur molaire en CeO₂ égale à 11,9%, et présentant une teneur en ferrite hexagonale de type M comportant du fer, du lanthane et de l'aluminium égale à 6% sur la base de la masse des phases cristallisées, sont attirées par un aimant, contrairement aux billes de l'exemple de référence 1, la poudre de billes de l'exemple 6 présentant une usure UP% égale à 1,8%, c'est-à-dire 21,7% inférieure à l'usure UP% de la poudre de billes de l'exemple 1 de référence hors invention.

Une comparaison de l'exemple 1 de référence hors invention, de l'exemple 2 selon l'invention et de l'exemple 7 hors invention, montre que les billes selon l'exemple 7, comportant de la zircone stabilisée avec Y₂O₃, une teneur molaire en Y₂O₃ égale à 3,1%, et présentant une teneur en spinelle comportant du fer, du zinc et du cuivre égale 8% sur la base de la masse des phases cristallisées, présente de manière surprenante une usure UP% égale à 3,3%, c'est-à-dire 43,5% supérieure à l'usure UP% des billes de l'exemple 1 et 65% supérieure à l'usure UP% des billes de l'exemple 2. Bien que les billes de l'exemple 7 soient attirées par un aimant, elles présentent une usure UP% bien supérieure à celle de l'exemple de référence 1, ce qui démontre que la présence de CeO₂ en tant que stabilisant de la zircone est nécessaire.

Une comparaison de l'exemple 1 de référence hors invention, de l'exemple 3 selon l'invention et de l'exemple 8 hors invention, montre que les billes selon l'exemple 8, comportant de la zircone stabilisée avec CeO₂ et Y₂O₃, les teneurs molaires en CeO₂ et en Y₂O₃ étant égales à 1,1% et 2,9%, respectivement, et présentant une teneur en spinelle comportant du fer, du zinc et du cuivre égale 10% sur la base de la masse des phases cristallisées, présente une usure UP% égale à 2,5%, c'est-à-dire 8,7% supérieure à l'usure UP% des billes de l'exemple 1 et 31,6% supérieure à l'usure UP% des billes de l'exemple 3. Bien que les billes de l'exemple 8 soient attirées par un aimant, elles présentent une usure UP% supérieure à celle des exemples 1 et 3, ce qui démontre que la présence de CeO₂ en une quantité supérieure à 1,5 mol% est nécessaire.

Une comparaison de l'exemple 1 de référence hors invention, et de l'exemple 9 selon l'invention, montre que les billes selon l'exemple 9, comportant de la zircone stabilisée avec CeO₂ et Y₂O₃, les teneurs molaires en CeO₂ et en Y₂O₃ étant égales à 5,4% et 2%, respectivement, et présentant une teneur en spinelle comportant du fer et du zinc et du cuivre égale à 8% sur la base de la masse des phases cristallisées, sont attirées par un aimant, contrairement aux billes de l'exemple de référence 1, la poudre de billes de l'exemple 9 présentant une usure UP% égale à 1,6%, c'est-à-dire 30,4% inférieure à l'usure UP% de la poudre de billes de l'exemple 1 de référence hors invention.

Les billes frittées selon l'invention, ainsi que des fragments desdites billes peuvent ainsi facilement être séparés d'un constituant liquide ou solide broyé à l'aide des dites billes, par simple application d'un champ magnétique.

Comme cela apparaît clairement à présent, l'invention permet donc de fournir une poudre de billes de zircone présentant une bonne résistance à l'usure et permettant de limiter la contamination de la matière broyée.

Bien entendu, l'invention n'est pas limitée aux exemples et modes de réalisation décrits ci-dessus.

## Revendications

1. Bille frittée présentant les phases cristallisées suivantes, en pourcentages en masse sur la base des phases cristallisées et pour un total de 100% :
zircone stabilisée : complément à 100% ;
zircone monoclinique : ≤ 20% ;
4% ≤ constituant magnétique ≤ 22% ;
phases cristallisées autres que zircone stabilisée, zircone monoclinique et constituant magnétique : < 10% ;
le constituant magnétique étant choisi parmi les spinelles magnétiques, les grenats magnétiques, les ferrites hexagonales magnétiques et leurs mélanges ;
la bille frittée comportant, hors constituant magnétique, CeO₂ et optionnellement Y₂O₃, en des teneurs telles que, en pourcentages molaires sur la base de la somme de ZrO₂, CeO₂ et Y₂O₃, 3% ≤ CeO₂ <_ 17,5% et 1,5% ≤ Y₂O₃ + (CeO₂)/3,5 ≤ 5%.

2. Bille frittée selon la revendication précédente, dans laquelle, hors constituant magnétique, CeO₂ <_ 16%, en pourcentages molaires sur la base de la somme de ZrO₂, CeO₂ et Y₂O₃.

3. Bille frittée selon la revendication précédente, dans laquelle 5% ≤ CeO₂ et CeO₂ < 15%, en pourcentages molaires sur la base de la somme de ZrO₂, CeO₂ et Y₂O₃.

4. Bille frittée selon l'une quelconque des revendications précédentes dans laquelle, hors constituant magnétique, Y₂O₃ + (CeO₂)/3,5 est supérieure ou égale à 2% et inférieure ou égale à 4%.

5. Bille frittée selon l'une quelconque des revendications précédentes dans laquelle la zircone est stabilisée entièrement avec CeO₂, ou dans laquelle la zircone stabilisée est stabilisée entièrement avec CeO₂ et Y₂O₃.

6. Bille frittée selon l'une quelconque des revendications précédentes, dans laquelle la zircone stabilisée est présente, pour plus de 90%, sous la forme de zircone quadratique, en pourcentage massique sur la base de la zircone stabilisée et/ou présentant une teneur en zircone monoclinique, en pourcentage en masse sur la base de la quantité totale de phases cristallisées, inférieure ou égale à 10%.

7. Bille frittée selon l'une quelconque des revendications précédentes, présentant une teneur en constituant magnétique supérieure ou égale à 5% et inférieure ou égale à 18%, en pourcentages en masse sur la base des phases cristallisées.

8. Bille frittée selon la revendication immédiatement précédente, présentant une teneur en constituant magnétique supérieure ou égale à 7% et inférieure ou égale à 15%, en pourcentages en masse sur la base des phases cristallisées.

9. Bille frittée selon l'une quelconque des revendications précédentes, dans laquelle
- ledit spinelle magnétique est constitué, hors oxygène et pour plus de 90% de sa masse, de fer et de zinc et de cuivre, de fer et de cuivre et d'aluminium, de fer et de nickel, de fer et de cobalt, de fer et de cuivre, de fer et de zinc, de fer et de magnésium, de fer et de manganèse, de fer et de nickel et de zinc, de fer et de nickel et de zinc et de cuivre, de fer et de manganèse et de zinc, de fer et de manganèse et de zinc et d'aluminium, de fer et de lithium et de zinc et de nickel et de manganèse, de fer et de zinc et de lithium, de fer et de zinc et de cuivre et d'aluminium et de calcium, et leurs mélanges ; et/ou
- la ferrite hexagonale magnétique est choisie parmi une ferrite hexagonale de type M, une ferrite hexagonale de type W et leurs mélanges, et/ou
- le constituant magnétique est choisi parmi les spinelles magnétiques, les ferrites hexagonales magnétiques et leurs mélanges, ou ledit grenat magnétique est choisi parmi les grenats comportant du fer .

10. Bille frittée selon l'une quelconque des revendications précédentes, dans laquelle 0,2% ≤ Al₂O₃ <_ 2%, Al₂O₃ étant exprimé hors constituant magnétique ; et/ou CaO ≤ 1,5%, CaO étant exprimé hors constituant magnétique.

11. Poudre de billes frittées comprenant plus de 90%, en pourcentages en masse, de billes frittées selon l'une quelconque des revendications précédentes.

12. Procédé d'extraction de billes et/ou de fragments de billes selon l'une quelconque des revendications 1 à 10, ledit procédé comportant l'étape suivante :
2) application d'un champ magnétique sur lesdites billes et/ou lesdits fragments de billes, de manière à attirer lesdites billes ou lesdits fragments de billes.

13. Procédé de broyage, de dispersion, d'homogénéisation d'une matière, ledit procédé comportant les étapes suivantes :
1) mélange d'une matière à broyer, à disperser, à homogénéiser, avec des billes et/ou des fragments de billes selon l'une quelconque des revendications 1 à 10, de manière à obtenir une charge ;
2) purification de la charge par extraction selon le procédé de la revendication 14, le champ magnétique étant appliqué sur ladite charge.

14. Procédé d'extraction de billes ou de fragments de billes selon l'une quelconque des revendications 1 à 10, d'une surface de substrat sur laquelle lesdites billes ou lesdits fragments de billes reposent, ledit procédé comportant les étapes suivantes :
1') projection de billes et/ou fragments de billes selon l'une quelconque des revendications 1 à 10 sur une surface à traiter, au moyen d'un appareil de projection ;
2) récupération desdites billes ou desdits fragments de billes par extraction selon le procédé de la revendication 12, le champ magnétique étant appliqué sur ladite surface de substrat, la surface de substrat pouvant être notamment la surface à traiter et/ou une surface dudit appareil de projection.

15. Procédé comportant une utilisation d'une poudre de billes frittées selon la revendication 11, comme média de broyage, média de dispersion, média d'homogénéisation, ou média pour le traitement de surfaces.

## Patentansprüche

1. Gesinterte Kugel, die in Gewichtsprozent auf Basis der kristallisierten Phasen und bei insgesamt 100% folgende kristallisierte Phasen aufweist:
stabilisiertes Zirconiumdioxid: Rest zu 100%;
monoklines Zirconiumdioxid: ≤ 20%;
4% ≤ magnetischer Bestandteil ≤ 22%;
kristallisierte Phasen außer stabilisiertem Zirconiumdioxid, monoklinem Zirconiumdioxid und magnetischem Bestandteil: < 10%;
wobei der magnetische Bestandteil aus magnetischen Spinellen, magnetischen Granaten, magnetischen hexagonalen Ferriten und ihren Mischungen ausgewählt ist;
wobei die gesinterte Kugel außerhalb des magnetischen Bestandteils CeO₂ und optional Y₂O₃ auf Basis der Summe aus ZrO₂, CeO₂ und Y₂O₃ mit einem Gehalt in Molprozent von 3% ≤ CeO₂ ≤ 17,5% und 1,5% ≤ Y₂O₃ + (CeO₂)/3,5 ≤ 5% aufweist.

2. Gesinterte Kugel nach dem vorhergehenden Anspruch, wobei außerhalb des magnetischen Bestandteils auf Basis der Summe aus ZrO₂, CeO₂ und Y₂O₃ CeO₂ in Molprozent ≤ 16% beträgt.

3. Gesinterte Kugel nach dem vorhergehenden Anspruch, wobei in Molprozent auf Basis der Summe aus ZrO₂, CeO₂ und Y₂O₃ 5% ≤ CeO₂ und CeO₂ ≤ 15% beträgt.

4. Gesinterte Kugel nach einem der vorhergehenden Ansprüche, wobei außerhalb des magnetischen Bestandteils Y₂O₃ + (CeO₂)/3,5 größer gleich 2% und kleiner gleich 4% beträgt.

5. Gesinterte Kugel nach einem der vorhergehenden Ansprüche, wobei das Zirconiumdioxid vollständig mit CeO₂stabilisiert ist oder wobei das stabilisierte Zirconiumdioxid vollständig mit CeO₂ und Y₂O₃ stabilisiert ist.

6. Gesinterte Kugel nach einem der vorhergehenden Ansprüche, wobei das stabilisierte Zirconiumdioxid in Gewichtsprozent auf Basis des stabilisierten Zirconiumdioxids mit über 90% in Form von quadratischem Zirconiumdioxid vorliegt und/oder auf Basis der Gesamtmenge kristallisierter Phasen einen Gehalt an monoklinem Zirconiumdioxid in Gewichtsprozent von kleiner gleich 10% aufweist.

7. Gesinterte Kugel nach einem der vorhergehenden Ansprüche, die auf Basis der kristallisierten Phasen einen Gehalt an magnetischem Bestandteil in Gewichtsprozent von größer gleich 5% und kleiner gleich 18% aufweist.

8. Gesinterte Kugel nach dem unmittelbar vorhergehenden Anspruch, die auf Basis der kristallisierten Phasen einen Gehalt an magnetischem Bestandteil in Gewichtsprozent von größer gleich 7% und kleiner gleich 15% aufweist.

9. Gesinterte Kugel nach einem der vorhergehenden Ansprüche, wobei
- der magnetische Spinell abgesehen von Sauerstoff und zu mehr als 90% seiner Masse aus Eisen und Zink und Kupfer, aus Eisen und Kupfer und Aluminium, aus Eisen und Nickel, aus Eisen und Cobalt, aus Eisen und Kupfer, aus Eisen und Zink, aus Eisen und Magnesium, aus Eisen und Mangan, aus Eisen und Nickel und Zink, aus Eisen und Nickel und Zink und Kupfer, aus Eisen und Mangan und Zink, aus Eisen und Mangan und Zink und Aluminium, aus Eisen und Lithium und Zink und Nickel und Mangan, aus Eisen und Zink und Lithium, aus Eisen und Zink und Kupfer und Aluminium und Calcium und ihren Mischungen besteht; und/oder
- das magnetische hexagonale Ferrit aus einem hexagonalen Ferrit vom M-Typ, einem hexagonalen Ferrit vom W-Typ und ihren Mischungen ausgewählt ist, und/oder
- der magnetische Bestandteil aus magnetischen Spinellen, magnetischen hexagonalen Ferriten und ihren Mischungen ausgewählt ist oder der magnetische Granat aus Granaten ausgewählt ist, die Eisen umfassen.

10. Gesinterte Kugel nach einem der vorhergehenden Ansprüche, wobei 0,2% ≤ Al₂O₃ ≤ 2%, wobei Al₂O₃ als außerhalb des magnetischen Bestandteils ausgedrückt ist; und/oder CaO ≤ 1,5%, wobei CaO als außerhalb des magnetischen Bestandteils ausgedrückt ist.

11. Pulver aus gesinterten Kugeln, das mehr als 90 Gewichts-% gesinterte Kugeln nach einem der vorhergehenden Ansprüche umfasst.

12. Verfahren zum Entfernen von Kugeln und/oder Bruchstücken von Kugeln nach einem der Ansprüche 1 bis 10, wobei das Verfahren folgenden Schritt umfasst:
2) Anlegen eines Magnetfelds an die Kugeln und/oder die Bruchstücke von Kugeln, damit die Kugeln und/oder Bruchstücke von Kugeln angezogen werden.

13. Verfahren zum Zerkleinern, Dispergieren, Homogenisieren eines Materials, wobei das Verfahren folgende Schritte umfasst:
1) Mischen eines zu zerkleinernden, dispergierenden, homogenisierenden Materials mit Kugeln und/oder Bruchstücken von Kugeln nach einem der Ansprüche 1 bis 10, damit ein Einsatzmaterial erhalten wird;
2) Reinigen des Einsatzmaterials durch Entfernen gemäß dem Verfahren nach Anspruch 14, wobei das Magnetfeld an das Einsatzmaterial angelegt wird.

14. Verfahren zum Entfernen von Kugeln oder Bruchstücken von Kugeln nach einem der Ansprüche 1 bis 10 von einer Substratoberfläche, auf der die Kugeln oder Bruchstücke von Kugeln liegen, wobei das Verfahren folgende Schritte umfasst:
1') Schleudern von Kugeln und/oder Bruchstücken von Kugeln nach einem der Ansprüche 1 bis 10 mit einer Schleudervorrichtung auf eine zu behandelnde Oberfläche;
2) Zurückgewinnen der Kugeln oder Bruchstücke von Kugeln durch Entfernen gemäß dem Verfahren nach Anspruch 12, wobei das Magnetfeld an die Substratoberfläche angelegt wird, wobei die Substratoberfläche insbesondere die zu behandelnde Oberfläche und/oder eine Oberfläche der Schleudervorrichtung sein kann.

15. Verfahren, das eine Verwendung eines Pulvers aus gesinterten Kugeln nach Anspruch 11 als Zerkleinerungsmittel, Dispersionsmittel, Homogenisierungsmittel oder Mittel zur Oberflächenbehandlung umfasst.

## Claims

1. A sintered bead having the following crystalline phases, as percentages by weight on the basis of the crystalline phases and for a total of 100%:
stabilized zirconia: complement to 100%;
monoclinic zirconia: ≤ 20%;
4% ≤ magnetic constituent ≤ 22%;
crystalline phases other than stabilized zirconia, monoclinic zirconia and magnetic constituent: < 10%;
the magnetic constituent being selected from magnetic spinels, magnetic garnets, magnetic hexagonal ferrites and their mixtures;
excluding the magnetic constituent, the sintered bead comprising CeO₂ and optionally Y₂O₃ in contents such that 3% ≤ CeO₂ ≤ 17.5% and 1.5% ≤ Y₂O₃ + (CeO₂)/3.5 ≤ 5%, as molar percentages on the basis of the sum of ZrO₂, CeO₂ and Y₂O₃.

2. The sintered bead as claimed in the preceding claim in which, excluding the magnetic constituent, CeO₂ ≤ 16%, as molar percentages on the basis of the sum of ZrO₂, CeO₂ and Y₂O₃.

3. The sintered bead as claimed in the preceding claim, in which 5% ≤ CeO₂ and CeO₂ ≤ 15%, as molar percentages on the basis of the sum of ZrO₂, CeO₂ and Y₂O₃.

4. The sintered bead as claimed in any one of the preceding claims in which, excluding the magnetic constituent, Y₂O₃ + (CeO₂)/3.5 is more than or equal to 2% and less than or equal to 4%.

5. The sintered bead as claimed in any one of the preceding claims, in which the zirconia is entirely stabilized with CeO₂, or in which the stabilized zirconia is entirely stabilized with CeO₂ and Y₂O₃.

6. The sintered bead as claimed in any one of the preceding claims, in which more than 90% of the stabilized zirconia is present in the form of quadratic zirconia, as a percentage by weight on the basis of the stabilized zirconia, and/or having a monoclinic zirconia content, as a percentage by weight on the basis of the total quantity of the crystalline phases, of less than or equal to 10%.

7. The sintered bead as claimed in any one of the preceding claims, having a magnetic constituent content of more than or equal to 5% and less than or equal to 18%, as percentages by weight on the basis of the crystalline phases.

8. The sintered bead as claimed in the immediately preceding claim, having a magnetic constituent content of more than or equal to 7% and less than or equal to 15%, as percentages by weight on the basis of the crystalline phases.

9. The sintered bead as claimed in any one of the preceding claims, in which
- excluding oxygen and for more than 90% of its mass, said magnetic spinel is constituted by iron and zinc and copper, by iron and copper and aluminum, by iron and nickel, by iron and cobalt, by iron and copper, by iron and zinc, by iron and magnesium, by iron and manganese, by iron and nickel and zinc, by iron and nickel and zinc and copper, by iron and manganese and zinc, by iron and manganese and zinc and aluminum, by iron and lithium and zinc and by nickel and manganese, by iron and zinc and lithium, by iron and zinc and copper and aluminum and calcium, and their mixtures; and/or
- the magnetic hexagonal ferrite is selected from a M-type hexagonal ferrite, a W-type hexagonal ferrite and their mixtures, and/or
- the magnetic constituent is selected from magnetic spinels, magnetic hexagonal ferrites and their mixtures, or.said magnetic garnet is selected from garnets comprising iron.

10. The sintered bead as claimed in any one of the preceding claims, in which 0.2% ≤ Al₂O₃ <_ 2%, Al₂O₃ being expressed as excluding the magnetic constituent; and/or
CaO ≤ 1.5%, CaO being expressed as excluding the magnetic constituent.

11. Powdered sintered beads comprising more than 90%, as percentages by weight, of sintered beads in accordance with any one of the preceding claims.

12. A method for extracting beads and/or fragments of beads in accordance with any one of claims 1 to 10, said method comprising the following step:
2) applying a magnetic field to said beads and/or said fragments of beads, in a manner such as to attract said beads or said fragments of beads.

13. A method for grinding, dispersing, homogenizing a material, said method comprising the following steps:
1) mixing a material to be ground, to be dispersed, to be homogenized, with beads and/or fragments of beads in accordance with any one of claims 1 to 10, in order to obtain a charge;
2) purifying the charge by extraction in accordance with the method of claim 14, the magnetic field being applied to said charge.

14. The method for extracting beads or fragments of beads in accordance with any one of claims 1 to 10 from a surface of a substrate on which said beads or said fragments of beads are lying, said method comprising the following steps:
1') projecting beads and/or fragments of beads in accordance with any one of claims 1 to 10 onto a surface to be treated by means of a projection apparatus;
2) recovering said beads or said fragments of beads by extraction in accordance with the method of claim 12, the magnetic field being applied to said substrate surface, the substrate surface possibly in particular being the surface to be treated and/or a surface of said projection apparatus.

15. A method comprising the use of powdered sintered beads in accordance with claim 11, as a grinding medium, dispersion medium, homogenizing medium or medium for the treatment of surfaces.
